# EUROPEAN PATENT APPLICATION

(11) **EP 3 447 715 A1**
(43) Date of publication of application: **27.02.2019**
(21) Application number: 18781944.6
(22) Date of filing: 21.06.2018
(51) Int. Cl.: G06Q 40/02, G06Q 20/36, G06Q 20/38, G06Q 50/26

(54) **METHOD, PROGRAM, AND COMPUTER READABLE RECORDING MEDIUM FOR TAX REFUND USING BLOCK CHAIN-BASED CRYPTO-CURRENCY**

(30) Priority: 27.06.2017 KR 20170081365
(71) Applicant: Kim, Joon Hun, Seoul 08393 (KR)
(72) Inventor: NAM, Ki Seok, Seoul 08311 (KR); KONG, Hyun Jin, Seoul 07059 (KR); KIM, Joon Hun, Seoul 08393 (KR)
(74) Representative: Gulde & Partner
(86) International application number: PCT/KR2018/007004
(87) International publication number: WO 2019/004650

(57) **Abstract**

Disclosed herein is a method for providing a tax refund using block chain-based crypto-currency. The method includes when a foreigner purchases goods at a tax refund shop, generating temporary trading for transmitting conditional crypto-currency having a currency value corresponding to a tax refund amount for the goods to an electronic wallet of the foreigner, and when the customhouse permits the goods to be carried out, generating final trading of transmitting the conditional crypto-currency to the electronic wallet of the foreigner.

## Description

### [Technical Field]

The present invention relates to a method, program, and computer-readable recording medium for providing a tax refund using a block chain-based crypto-currency (i.e., virtual currency).

The present invention may be used in airports, hotels, casinos, banks, department stores, shopping malls, duty-free shops, etc., and may be provided in the form of applications in smart devices such as smartphones. Also, the present invention may be linked with a payment service and a tax refund service of online/offline affiliated stores and may be linked with an accumulation service such as points of affiliated stores or complimentaries (COMPS) of casinos.

### [Background Art]

Duty-free shops refer to shops exempt from the payment of taxes, which are found in lounges of airports or downtown areas to acquire foreign currency or promote foreign travelers' convenience. These duty-free shops include a tax-free shop and a tax refund shop.

The tax-free shop (airports and downtown duty-free shops) is a duty-free shop that gives tax exemption benefits (exemption of customs duty, as well as a value added tax (VAT), a special consumption tax,) to prices of goods purchased by local residents or and foreigners who go overseas.

The tax refund shop is a duty-free shop that allows foreigners to get a refund of a VAT and a special consumption tax on goods they purchased, at the airport when they leave the country.

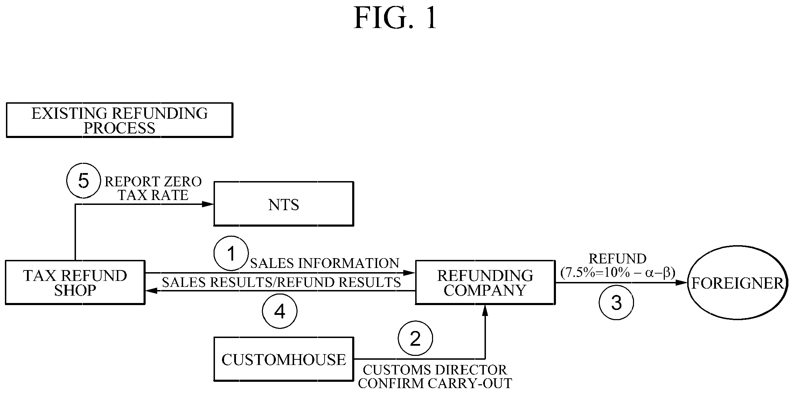

Here, a refund process through a tax refund shop has been performed in a manner as illustrated in FIG. 1. In detail, when goods are sold to a foreigner at a tax refund shop, the sales information on the sold goods is transmitted from the tax refund shop to a refunding company (①). Also, a customhouse checks the receipt of the goods purchased by the foreigner and a passport of the foreigner and issues a tax return slip indicating the confirmation of the goods to be carried out, to the foreigner. The foreigner then submits the tax return slip to the refunding company (②).

In this case, the refunding company deducts the commission of the tax refund shop and the commission of the refunding company from 10% of the selling price and then returns about 7.5% of the selling price to the foreigner (③). Also, the refunding company sends the sales results and the refund results to the tax refund shop (④), and the tax refund shop reports the zero tax rate for the refund to the National Tax Service (NTS) according to the received sales results and refund results (⑤).

The above-mentioned refund procedure is intended to encourage tourist consumption by exempting the national tax from foreigners, and the tax refund shop may bring about an effect of boosting sales through the refund procedure.

However, the problem of such a refund procedure is that the refunding company acts for operating works such as sales, refunding, settlement, and the like, of the tax refund shops, and thus, the refunding company relays and collects data to be provided to the NTS and gets commissions. That is, the refunding company provides a portion (α) of the refunded tax, as a rebate, to the tax refund shops, which brings about a contradictory result in that the tax refund shops (α)+ refunding company (β) take 2.5% of the national tax. As a result, a discount effect is not only lowered but contrary to the original purpose of the system.

### [Disclosure]

### [Technical Problem]

An object of the present invention is to provide a method, program, computer-readable recording medium, in which a role played by an existing refund company is replaced with a block chain-based crypto-currency.

### [Technical Solution]

According to an exemplary embodiment of the present invention, a method for providing a tax refund using block chain-based crypto-currency includes: when a foreigner purchases goods at a tax refund shop, generating first crypto-currency trading data in which a subject to get a tax refund for the goods is designated to be different according to conditions; when the first crypto-currency trading data is signed with a private key of the tax refund shop, generating second crypto-currency trading data in which a customhouse is a recipient; when the generated second crypto-currency trading data is signed with a private key of the customhouse, generating third crypto-currency trading data for providing the crypto-currency to the foreigner; and when the generated second crypto-currency trading data is not signed with the private key of the customhouse, generating fourth crypto-currency trading data for providing the crypto-currency to the National Tax Service (NTS) or the tax refund shop.

The method may further include: when the second crypto-currency trading data is generated, transmitting the second crypto-currency trading data to a node device of the customhouse using a public key of the customhouse included in the generated second crypto-currency trading data.

The method may further include: when the third crypto-currency trading data is generated, broadcasting the generated third crypto-currency trading data to node devices of a peer-to-peer (P2P) network, or when the fourth crypto-currency trading data is generated, broadcasting the generated fourth crypto-currency trading data to the node devices of the P2P network.

The tax refund shop, the customhouse, the NTS, and the foreigner may each include a node device performing the crypto-currency processing, and each node device may store a private key for verifying ownership for trading in advance.

The first crypto-currency trading data may include trading details information including information of the tax refund shop, goods amount information, tax refund information, and passport information, as metadata.

The first crypto-currency trading data may be data in which signatures of a plurality of subjects are set on the foregoing conditions.

The first crypto-currency trading data may include a lock script in which an address of a recipient of trading data and the foregoing conditions are recorded and a release script in which a signature signed by a sender transmitting the trading data through a private key is recorded.

In the lock script, a condition value indicating that a signature is to be made using a tax refund public key, a customhouse public key, a foreigner public key, an NTS public key, and at least two private keys may be recorded.

In the release script of the third crypto-currency trading data, a signature made through the private key of the tax refund shop and a signature made through the private key of the customhouse may be recorded.

According to an exemplary embodiment of the present invention, a method for providing a tax refund using block chain-based crypto-currency includes: when a foreigner purchases goods at a tax refund shop, generating temporary trading for transmitting conditional crypto-currency having a currency value corresponding to a tax refund amount for the goods to an electronic wallet of the foreigner; and when a customhouse permits the goods to be carried out, generating final trading of transmitting the conditional crypto-currency to the electronic wallet of the foreigner.

The method may further include: when the customhouse does not permit the goods to be carried out or when the term for carrying out the goods has expired, generating final trading of transmitting the conditional crypto-currency to the NTS or the tax refund shop.

According to an exemplary embodiment of the present invention, a computer-readable recording medium may record a program for performing a method for providing a tax refund using block chain-based crypto-currency.

According to an exemplary embodiment of the present invention, a computer program may record a code stored in a computer-readable recording medium and performing a method for providing a tax refund using block chain-based crypto-currency.

### [Advantageous Effects]

According to the various exemplary embodiments of the present invention described above, since the commission and a sales rebate of a refunding company are not paid, defraudation (snatch) of the national tax may be mitigated.

According to the various exemplary embodiments of the present invention described above, since the tax is fully refunded to foreigners (previously 7.5%→10%) and the tax included in the selling price is immediately refunded, the tax exemption effect is maximized to contribute to the revitalization of tourism consumption.

Further, according to various exemplary embodiments of the present invention described above, the tax refund shop simply totals the results of providing the crypto-currency such as refund coins and provides the same to the NTS, simplifying the tax reporting service of the tax refund shop.

Also, according to various exemplary embodiments of the present invention described above, since the NTS receives refund coins which have not been refunded to foreigners during a refund period, a possibility of tax evasion due to omission of tax declaration or delinquency may be eliminated.

### [Description of Drawings]

FIG. 1 is a view illustrating a refund procedure for goods purchased at a tax refund shop.
FIG. 2 is a view illustrating a tax refund system using a block chain-based crypto-currency according to an exemplary embodiment of the present invention.
FIG. 3 is a flowchart illustrating a method of providing a tax refund using a block chain-based crypto-currency according to FIG. 2.
FIG. 4 is a diagram illustrating a structure of data for crypto-currency trading data according to an exemplary embodiment of the present invention.
FIG. 5 is a block diagram of a system for providing a tax refund using a block chain-based crypto-currency according to another exemplary embodiment of the present invention.
FIG. 6 is a flowchart illustrating a refund method according to FIG. 5.

### [Best Mode]

The following content merely illustrates the principles of the present invention. Therefore, although it is not clearly described or illustrated herein, those skilled in the art may implement the principles of the present invention that includes a wide variety of devices that can be invented. In addition, it is understood that all conditional terms listed herein and the exemplary embodiments are intended only for the purpose of, in principle, to understand the concept of the present invention and are not limited to the specifically enumerated exemplary embodiments and states.

In addition, it should be understood that all the detailed descriptions for specific embodiments, as well as the principle, perspectives, and embodiments of the present invention, intentionally include structural and functional equivalents of such matters. Also, it should be understood that the equivalents include all the devices invented to perform the same functions irrespective of the equivalents, i.e., structures, to be developed in the future, as well as currently known equivalents.

Thus, flow diagrams, state transition, such as a pseudo-code, or the like, may be understood to be substantially represented in a computer-readable medium and represent various processes performed by a computer or a processor, no matter whether the computer or the processor is clearly illustrated.

The processor or a similar concept that includes the functional blocks illustrated in the drawings and various features of the device with the ability to run software in conjunction with appropriate software may be provided by the use of hardware, as well as dedicated hardware. Features, a single dedicated processor, by the processor when they become available, can be provided by a single shared processor, or a plurality of individual processors, some of which can be shared.

The aforementioned objects, features and advantages will become more apparent through the following detailed description with respect to the accompanying drawings, and thus, the technical idea of the present invention may be easily carried out by a person of skilled in the art to which the present invention pertains. In describing the present invention, a detailed description of known techniques associated with the present invention unnecessarily obscure the gist of the present invention, it is determined that the detailed description thereof will be omitted.

Hereinafter, various exemplary embodiments of the present invention will be described in detail with reference to the accompanying drawings.

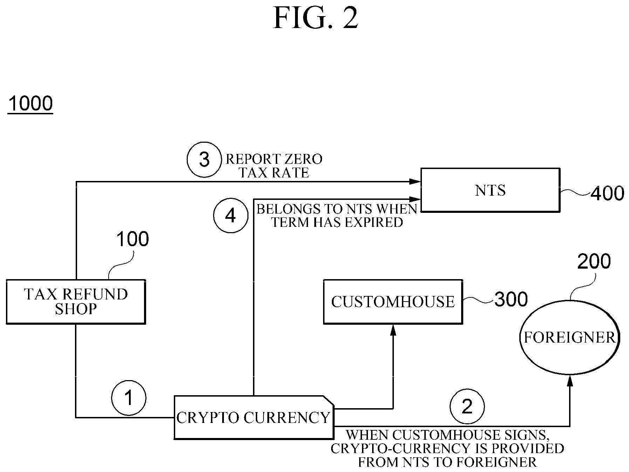

FIG. 2 is a view illustrating a tax refund system using a block chain-based crypto-currency according to an exemplary embodiment of the present invention. Referring to FIG. 2, a tax refund system 1000 according to an exemplary embodiment of the present invention may include a tax refund shop 100, a foreigner 200, a customhouse 300, and the National Tax Service (NTS) 400.

Hereinafter, the tax refund shop 100 may refer to a duty-free shop that allows the foreigner 200 to get a refund of a value added tax (VAT) and a special consumption tax on the goods that the foreigner 200 purchased at the tax refund shop 100 of the airport when the foreigner 200 departs. The foreigner 200 may refer to a person who has a foreign nationality. The customhouse 300 may refer to one of the agencies attached to the Customs Service, which is located in airfields, ports, and border areas and is responsible for controlling the flow of goods carried by tourists or import and export freight and handling of the customs duties. The NTS 400, one of central administrative agencies, may refer to an agency that takes charge of the imposition, exemption and collection of internal tax.

The tax refund system 1000 according to an exemplary embodiment of the present invention may replace the role played by the existing refunding company with a block chain-based crypto-currency as a refund means to immediately return a tax included in a selling price of a tax refund shop to a foreigner who has purchased goods.

To this end, the tax refund shop 100, the foreigner 200, the customhouse 300, and the NTS 400 constituting the tax refund system 1000 may each include a node device for processing a block chain-based crypto-currency. Here, the node device may be realized as a device having a communication function to access a wired/wireless network. For example, the node device may be realized as a smartphone, a tablet computer, a personal digital assistant (PDA), a portable multimedia player (PMP), a wearable smart glass, a wearable smart watch, a desktop computer, a notebook computer, and the like.

Such a node device may store in advance a private key capable of proving ownership regarding trade. Specifically, block chain-based crypto-currencies are a pair of keys in the form of a 'private key-public key (address)'. The public key corresponds to a bank account number and the private key corresponds to a password, which are a pair that fits only with one another.

Here, the crypto-currency refers to an online virtual currency (digital currency) without a physical form unlike a banknote or a coin. A typical crypto-currency is a bitcoin and also includes a light coin, a dark coin, a name coin, a dogecoin, a ripple, and the like. Since details of trade using these crypto-currencies are collected and kept in a block chain and stored in a wallet, the bitcoin, the light coin, the dark coin, the name coin, the dogecoin, and the ripple are collectively termed as block chain-based crypto-currency.

For a crypto-currency user, there are a generic concept of 'wallet' and a subordinate concept of 'address'. In one wallet, the user may arbitrarily create a myriad of addresses, and these addresses are managed by one password for the corresponding wallet.

That is, a public key corresponding to a public address and a private key corresponding to a password are given to the wallet, and goods are purchased using a bitcoin based on the unique address.

Meanwhile, a bitcoin (BTC) system representing the crypto-currency, which was developed by a programmer as an individual or a group who uses a nickname of Nakamoto Satoshi in 2009, is based on a peer-to-peer (P2P)-based distributed database, not basically dependent upon a specific computer or network, and trade on the basis of a public key encryption scheme.

The bitcoin based on the payment scheme described above is advantageous in that it may be used even without information such as a card number, an expiration date, a CCV number, and the like, necessary for a credit card payment and a fee thereof is low. In addition, the bitcoin is stored in an electronic wallet in the form of a file, each electronic wallet is assigned a unique address, and bitcoin trading is made based on the address.

In order to use the bitcoin having such payment characteristics, a bitcoin user first subscribes to a bitcoin exchange, opens an electronic wallet, and charges KRW corresponding to won.

Thereafter, when the user checks a current market value of bitcoin traded in the bitcoin exchange and makes a purchase order by inputting the number and price of bitcoin desired to be purchased, trading is established through a sales order fitting to the trading conditions, whereby the user may perform payment through the bitcoin when purchasing goods.

In a block-chain-based crypto-currency trading system, devices of individual users participating in a network are referred to as node devices, which may interwork with a server operated by the bitcoin exchange.

The node devices may each be provided with a program for performing a bitcoin-related function. Specifically, when bitcoin payment is made, the node devices are devices forming a bitcoin network that make the bitcoin payment through authentication and recording of the bitcoin payment.

To this end, an electronic wallet having a block chain may be installed in each node device. When trading data for bitcoin payment generated in accordance with a general bitcoin payment is received in a block chain, bitcoin payment is authenticated by varying the received trading data for bitcoin payment, the trading data for bitcoin payment is recorded according to the authentication, and the trading data for bitcoin payment is transmitted, i.e., broadcast, to the node devices.

Here, broadcasting of the trading data for bitcoin payment is agreed by a protocol. For example, when trading data for bitcoin payment is generated, one node broadcasts the trading data for bitcoin payment to eight designated nodes, and each of the eight nodes which receive the trading data for bitcoin payment repeatedly broadcasts the trading data for bitcoin payment to eight designated nodes. This pyramid type broadcasting is completed when the trading data for bitcoin payment is broadcast to all the node devices equipped with an electronic wallet having a block chain required for performing bitcoin payment. Also, it is not possible to forge or falsify every information including the trading data for bitcoin payment recorded in the block chain.

Meanwhile, the tax refund system 1000 illustrated in FIG. 2 may return the tax to the foreigner using the characteristics of the crypto-currency based on the block chain described above. When the foreigner 200 purchases goods at the tax refund shop 100, the tax refund system 1000 according to an exemplary embodiment of the present invention may generate temporary trading for transmitting a conditional crypto-currency having a currency value corresponding to a tax refund amount on the goods. When the customhouse 300 permits the foreigner 200 to carry out the purchased goods, the customhouse 300 may generate final trading of transmitting the conditional crypto-currency to an electronic wallet of the foreigner 200. If, however, the customhouse 300 does not permit the goods to be carried out or the term for carrying out the goods has expired, the customhouse may generate final trading of transmitting the conditional crypto-currency to the NTS 400.

Here, the conditional crypto-currency may refer to a crypto-currency that a recipient of the tax refund is varied according to predetermined conditions.

More specifically, when the foreigner 200 purchases goods at the tax refund shop 100, the tax refund shop 100 may generate a crypto-currency in which the foreigner 200 is defined as a primary recipient for tax refund for the corresponding goods and the NTX 400 is defined as a secondary recipient, and broadcast the generated crypto-currency to the customhouse 300 (①).

If the crypto-currency transmitted to the customhouse 300 is signed with the private key of the customhouse 300, the crypto-currency may be provided from the NTS 400 to the foreigner 200 according to the conditions predefined in the crypto-currency (②). Here, signing with the private key of the customhouse 300 may have the same meaning as that a customs director confirms that the corresponding goods can be carried out.

Also, when the crypto-currency is provided to the foreigner 200, the tax refund shop 100 may report a zero tax rate for the refund to the NTS 400 according to the sales result and the refund result (③).

However, if the crypto-currency transmitted to the customhouse 300 is not signed with the private key of the customhouse 300 or is not signed within a predetermined period of time, the crypto-currency may belong to the NTX 400 according to the conditions predefined in the crypto-currency (④). Here, the fact that the crypto-currency is not signed with the private key of the customhouse 300 or is not signed within the predetermined period of time may mean that the customs director does not permit the corresponding goods to be carried out or that the term for the corresponding goods to be carried out has expired.

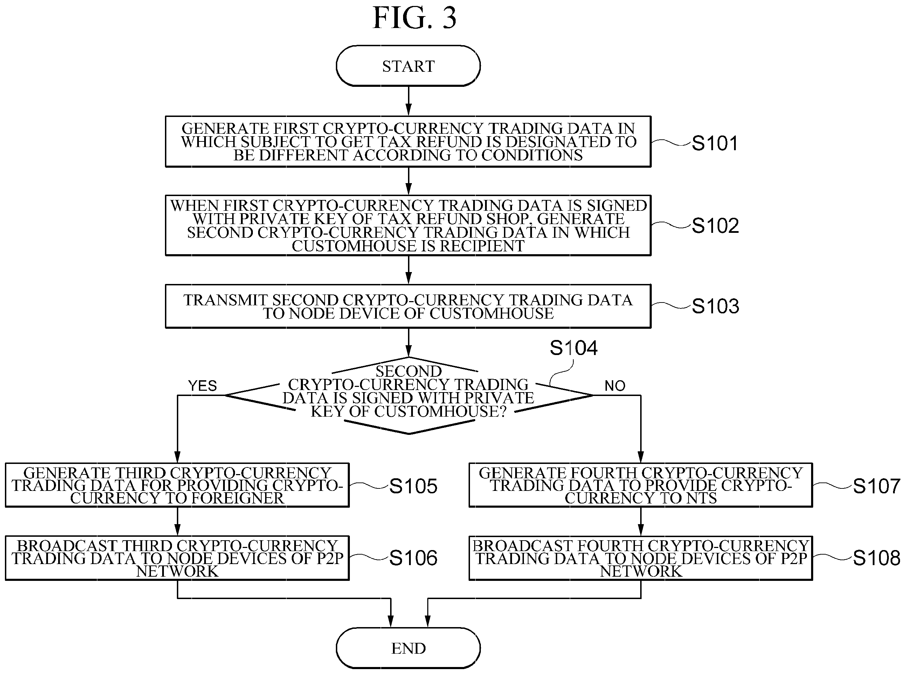

The method for providing a tax refund using a block chain-based crypto-currency of the tax refund system 1000 according to an exemplary embodiment of the present invention will be described in more detail with reference to FIG. 3.

FIG. 3 is a flowchart illustrating a method for providing a tax refund using a block chain-based crypto-currency illustrated in FIG. 2. Referring to FIG. 3, when a foreigner purchases goods at a tax refund shop, first crypto-currency trading data in which a subject to get a tax refund for the goods is designated to be different according to conditions may be generated (S101).

More specifically, the first crypto-currency trading data may be data in which a signature using private keys of a plurality of subjects is set under the foregoing conditions. In the tax refund system 1000 according to FIG. 2, the data may include a primary signer set as the tax refund shop 100 and a secondary signer set as the customhouse 300.

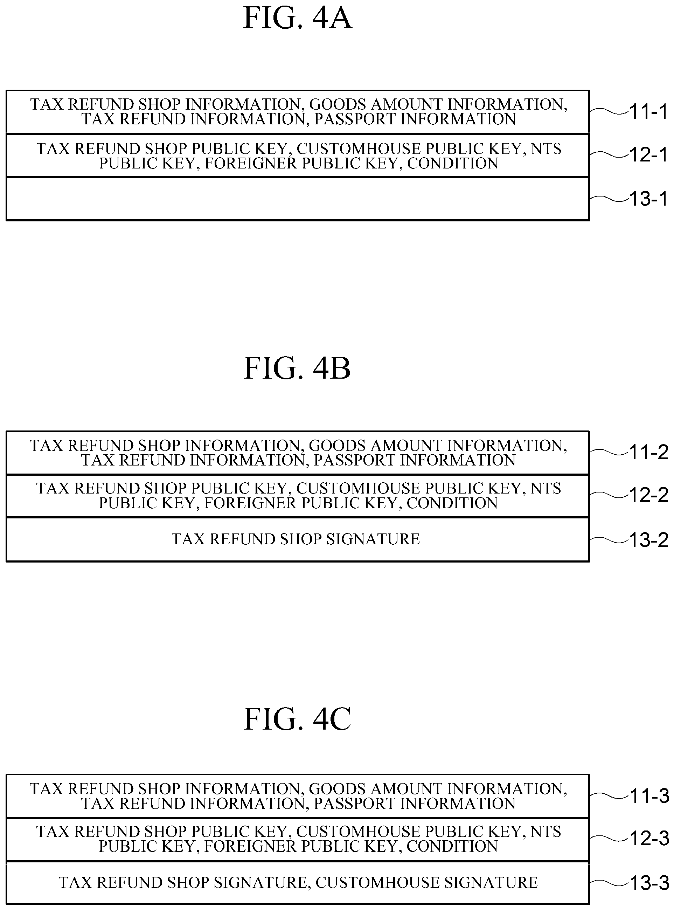

The first crypto-currency trading data may include metadata 11-1, a lock script 12-1, and a release script 13-1, as illustrated in FIG. 4(a).

The metadata 11-1 may include information on the tax refund shop, goods amount information, tax refund amount information, and passport information. Here, the tax refund shop information may refer to identification information of the tax refund shop which sells the goods to the foreigner 200, the goods amount information may refer to information on the amount of goods purchased by the foreigner 200, the tax refund information may refer to amount information of a tax to be returned to the foreigner 200, in the amount of the goods purchased by the foreigner 200, and the passport information may refer to passport information of the foreigner 200.

The metadata may be included in operation code (OP) return information of the trading data generated during crypto-currency trading so as to be transmitted. In this case, the electronic wallet of each of the node devices is handled and broadcast as private information, rather than general crypto-currency payment, and as the OP return information is recorded in the trading information for verification of a certificate, whereby it may be utilized as a major component for determining prevention of forgery and falsification of digital contents.

Here, when the message "OP return" is read on the trading data at the time of crypto-currency payment authentication in the electronic wallet of the node device, it may be used as a guide for recognizing that the information in which the message of OP return is recorded is utilized as information indicating a certain 40-byte data value, rather than a crypto-currency trading data.

In the lock script 12-1, an address of a recipient of trading data and the foregoing conditions may be recorded. In the lock script 12-1 of the first crypto-currency trading data, a condition value indicating that a signature is to be made using a tax refund public key, a customhouse public key, a foreigner public key, an NTS public key, and at least two private keys may be recorded as illustrated in FIG. 4(a). In the tax refund system 1000 according to FIG. 2, the data may include a primary signer set as the tax refund shop 100 and a secondary signer set as the customhouse 300.

In the release script 13-1, a signature signed by a sender transmitting the trading data through a private key may be recorded. Since the first crypto-currency trading data is data before signing a signature, the signature may not be recorded in the release script 13-1 of the first crypto-currency trading data as illustrated in FIG. 4(a).

Here, the first crypto-currency trading data may be data whose signature is set using private keys of a plurality of subjects under the foregoing conditions. In the tax refund system 1000 according to FIG. 2, the data may include a primary signer set as the tax refund shop 100 and a secondary signer set as the customhouse 300.

When the first crypto-currency trading data is signed with the private key of the tax refund shop 100, second crypto-currency trading data in which the customhouse 300 is a recipient may be generated (S102). For example, the second crypto-currency trading data may be in such a form as illustrated in FIG. 4(b). Specifically, the second crypto-currency trading data may include metadata 11-2, a lock script 12-2, and a release script 13-2, and here, a signature of the tax fund shop 100 signed in the first crypto-currency trading data may be recorded in the release script 13-2. Also, as a subject which receives the second crypto-currency trading data, the customhouse 300 may be determined on the basis of a condition value of the lock script 12-2.

Then, when the second crypto-currency trading data is generated, the second crypto-currency trading data may be transmitted to the node device of the customhouse 300 (S103). Specifically, when the second crypto-currency trading data is generated, the second crypto-currency trading data may be transmitted to the node device of the customhouse using a public key of the customhouse included in the lock script 12-2 of the generated second crypto-currency trading data. Here, transmitting the second crypto-currency trading data to the customhouse 300 from the tax refund shop 100 is moving the subject of the signature from the tax refund shop 100 to the customhouse 300, having a concept different from that of broadcasting to a block chain network.

Also, it may be determined whether the generated second crypto-currency trading data is signed with the private key of the customhouse 300 (S104). Here, the determining step S104 may be implemented as determining only whether a signature is written or determining whether a signature is written within a predetermined period of time as a term requirement is added.

If the generated second crypto-currency trading data is signed with the private key of the customhouse 300, third crypto-currency trading data for providing the crypto-currency to the foreigner 200 may be generated (S105). For example, the third crypto-currency trading data may be in such a form as illustrated in FIG. 4(c). More specifically, the third crypto-currency trading data may include metadata 11-3, a lock script 12-3, and a release script 13-3. Here, a signature of the customhouse 300 which has signed in the second crypto-currency trading data may be recorded in the release script 13-3. The subject who receives the third crypto-currency trading data may be determined as the foreigner 200 based on a condition value of the lock script 12-3.

When the third crypto-currency trading data is generated, the generated third crypto-currency trading data may be broadcast to the node devices of the P2P network (S106). Here, broadcasting to the node devices of the network (S106) may be a process of broadcasting the third crypto-currency trading data to designated node devices.

However, if the generated second crypto-currency trading data is not signed with the private key of the customhouse, fourth crypto-currency trading data for providing crypto-currency to the NTS may be generated (S107). Although not illustrated in FIG. 4, the generated fourth crypto-currency trading data may include metadata, a lock script, and a release script. Also, a subject who receives the fourth crypto-currency trading data may be determined as the NTS 400 based on a condition value of the lock script 12-3.

When the fourth crypto-currency trading data is generated, the generated fourth crypto-currency trading data may be broadcast to the node devices of the P2P network (S108). Here, the broadcasting to the node devices of the network (S108) may be broadcasting the fourth crypto-currency trading data to designated node devices.

Here, when the crypto-currency trading data is broadcast in step S106 or S108, the designated individual node devices authenticate the trading through verification of the received crypto-currency trading data and record the crypto-currency trading data having a block chain according to the authentication, thus completing the authentication of the trading.

According to the present invention, since the commission and a sales rebate of the refunding company are not paid, defraudation of the national tax may be mitigated.

Since the tax is fully refunded to foreigners (previously 7.5%→10%) and the tax included in the selling price is immediately refunded, the tax exemption effect is maximized to contribute to the revitalization of tourism consumption.

Also, according to various exemplary embodiments of the present invention described above, the tax refund shop simply totals the results of providing the crypto-currency such as refund coins and provides the same to the NTS, simplifying the tax reporting service of the tax refund shop.

Further, according to various exemplary embodiments of the present invention described above, since the NTS receives refund coins which have not been refunded to foreigners during a refund period, a possibility of tax evasion due to omission of tax declaration or delinquency may be eliminated.

However, according to the tax refund system 1000 illustrated in FIG. 2, there is a disadvantage that an apparatus and a system for handling crypto-currency are added to the existing business of the NTS 400.

Thus, a tax refund system 2000 according to another exemplary embodiment of the present invention may eliminate the disadvantages of the tax refund system 1000 of FIG. 2 by maintaining the existing additional tax report procedure. Here, the tax refund system 2000 according to another exemplary embodiment of the present invention may be different from the tax refund system 1000 of FIG. 2 in that a non-returned tax is paid to the tax refund shop, not to the NTS.

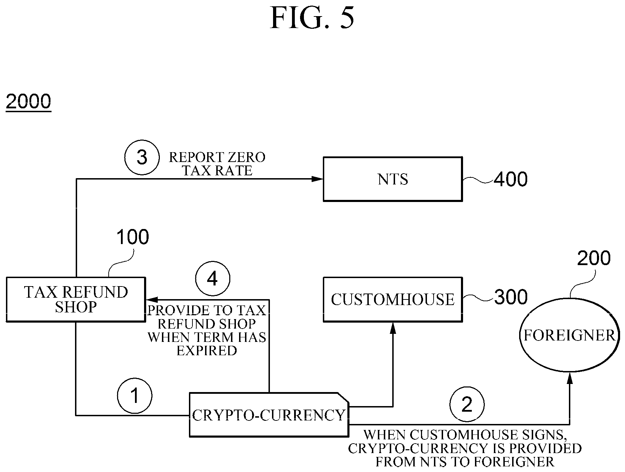

In detail referring to FIG. 5, the tax refund system 2000 according to another exemplary embodiment of the present invention may include a tax refund shop 100, a foreigner 200, a customhouse 300, and the NTX 400. When the foreigner 200 purchases goods at the tax refund shop 100, the tax refund system 1000 according to an exemplary embodiment of the present invention may generate temporary trading for transmitting a conditional crypto-currency having a currency value corresponding to a tax refund amount on the goods to the electronic wallet of the foreigner 200. When the customhouse 300 permits the foreigner 200 to carry out the purchased goods, the customhouse may generate final trading of transmitting the conditional crypto-currency to an electronic wallet of the foreigner 200. If, however, the customhouse 300 does not permit the goods to be carried out or the term for carrying out the goods has expired, the customhouse may generate final trading of transmitting the conditional crypto-currency to the tax refund shop 100.

More specifically, when the foreigner 200 purchases goods at the tax refund shop 100, the tax refund shop 100 may generate a crypto-currency in which the foreigner 200 is defined as a primary recipient for a tax refund for the corresponding goods and the tax refund shop 100 is defined as a secondary recipient, and broadcast the generated crypto-currency to the customhouse 300 (①).

If the crypto-currency transmitted to the customhouse 300 is signed with the private key of the customhouse 300, the crypto-currency may be provided to the foreigner 200 according to the conditions predefined in the crypto-currency (②). Here, signing with the private key of the customhouse 300 may have the same meaning as that a customs director confirms that the corresponding goods can be carried out.

Meanwhile, when the crypto-currency is provided to the foreigner 200, the tax refund shop 100 may report a zero tax rate for the refund to the NTS 400 according to the sales result and the refund result (③).

However, if the crypto-currency transmitted to the customhouse 300 is not signed with the private key of the customhouse 300 or is not signed within a predetermined period of time, the crypto-currency may be provided to the tax refund shop 100 according to the conditions predefined in the crypto-currency (④). Here, the fact that the crypto-currency is not signed with the private key of the customhouse 300 or is not signed within the predetermined period of time may mean that the customs director does not permit the corresponding goods to be carried out or that the term for the corresponding goods to be carried out has expired.

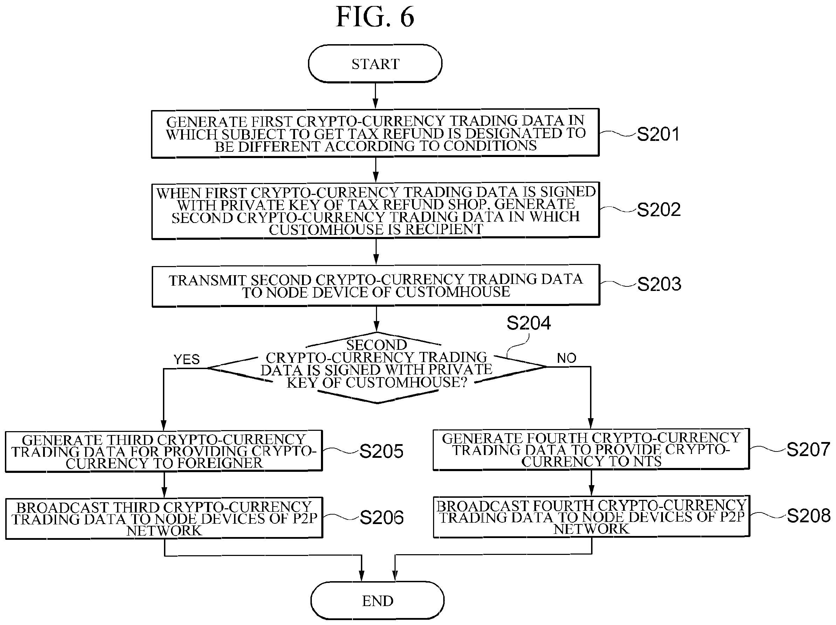

The method for providing a tax refund using a block chain-based crypto-currency of the tax refund system 2000 according to another exemplary embodiment of the present invention will be described in more detail with reference to FIG. 6.

FIG. 6 is a flowchart illustrating a method of providing a tax refund using a block chain-based crypto-currency of a tax refund system according to another exemplary embodiment of the present invention. The tax refunding method of FIG. 6 differs from the tax refund method of FIG. 3 in that a recipient of the crypto-currency is the tax refund shop 100 when a signature of the customhouse is not written or is not signed within a predetermined period of time.

Specifically, when a foreigner purchases goods at a tax refund shop, first crypto-currency trading data in which a subject to get a tax refund for the goods is designated to be different according to conditions may be generated (S201).

More specifically, the first crypto-currency trading data may be data in which a signature using private keys of a plurality of subjects is set under the foregoing conditions. In the tax refund system 2000 according to FIG. 5, the data may include a primary signer set as the tax refund shop 100 and a secondary signer set as the customhouse 300.

The first crypto-currency trading data according to FIG. 6 may include metadata, a lock script, and a release script. The metadata and the release script may be the same as illustrated in FIG. 4(a), and in the lock script, a condition value indicating that a signature is to be made using a tax refund shop public key, a customhouse public key, a foreigner public key, and at least two private keys may be recorded.

When the first crypto-currency trading data is signed with the private key of the tax refund shop 100, second crypto-currency trading data in which the customhouse 300 is a recipient may be generated (S202).

Then, when the second crypto-currency trading data is generated, the second crypto-currency trading data may be transmitted to the node device of the customs house 300 (S203). Specifically, when the second crypto-currency trading data is generated, the second crypto-currency trading data may be transmitted to the node device of the customhouse using a public key of the customhouse included in the lock script 12-2 of the generated second crypto-currency trading data. Here, transmitting the second crypto-currency trading data to the customhouse 300 from the tax refund shop 100 is moving the subject of the signature from the tax refund shop 100 to the customhouse 300, which is a concept different from that of broadcasting to a block chain network.

Also, it may be determined whether the generated second crypto-currency trading data is signed with the private key of the customhouse 300 (S204). Here, the determining step S204 may be implemented as determining only whether a signature is written or determining whether a signature is written within a predetermined period of time as a term requirement is added.

If the generated second crypto-currency trading data is signed with the private key of the customhouse 300, third crypto-currency trading data for providing the crypto-currency to the foreigner 200 may be generated (S205).

When the third crypto-currency trading data is generated, the generated third crypto-currency trading data may be broadcast to the node devices of the P2P network (S206).

However, if the generated second crypto-currency trading data is not signed with the private key of the customhouse, fourth crypto-currency trading data for providing crypto-currency to the tax refund shop may be generated (S207).

When the fourth crypto-currency trading data is generated, the generated fourth crypto-currency trading data may be broadcast to the node devices of the P2P network (S208).

Here, when the crypto-currency trading data is broadcast in step S206 or S208, the designated individual node devices authenticate the trading through verification of the received crypto-currency trading data and record the crypto-currency trading data having a block chain according to the authentication, thus completing the authentication of the trading.

Meanwhile, the methods according to various exemplary embodiments of the present invention described above may be implemented in the form of installation data and provided, to a server or devices, in a state of being stored in various non-transitory computer-readable medium. Accordingly, each device may access the server or the device storing the installation data and download the installation data.

The non-transitory computer-readable medium refers to a medium that stores data semi-permanently, rather than a medium storing data for a short period of time, such as a register, a cache, a memory, etc., and may be read by a device. Specifically, the various applications or programs described above may be stored on non-transitory computer-readable medium such as CD, DVD, hard disk, Blu-ray disk, USB, memory card, ROM, etc.

Although exemplary embodiments of the present invention have been illustrated and described hereinabove, the present invention is not limited to the above-mentioned specific exemplary embodiments, but may be variously modified by those skilled in the art to which the present invention pertains without departing from the scope and spirit of the present invention as disclosed in the accompanying claims. These modifications should also be understood to fall within the scope of the present invention.

## Claims

1. A method for providing a tax refund using block chain-based crypto-currency, the method comprising:
when a foreigner (200) purchases goods at a tax refund shop (100), generating temporary trading for transmitting conditional crypto-currency having a currency value corresponding to a tax refund amount for the goods to an electronic wallet of the foreigner (200); and
when a customhouse (300) permits the goods to be carried out, generating final trading of transmitting the conditional crypto-currency to the electronic wallet of the foreigner (200).

2. The method of claim 1, further comprising: when the customhouse (300) does not permit the goods to be carried out or when the term for carrying out the goods has expired, generating final trading of transmitting the conditional crypto-currency to the NTS or the tax refund shop (100).

3. A method for providing a tax refund using block chain-based crypto-currency, the method comprising:
when a foreigner (200) purchases goods at a tax refund shop (100), generating first crypto-currency trading data in which a subject to get a tax refund for the goods is designated to be different according to conditions;
when the first crypto-currency trading data is signed with a private key of the tax refund shop (100), generating second crypto-currency trading data in which a customhouse (300) is a recipient;
when the generated second crypto-currency trading data is signed with a private key of the customhouse (300), generating third crypto-currency trading data for providing the crypto-currency to the foreigner (200); and
when the generated second crypto-currency trading data is not signed with the private key of the customhouse (300), generating fourth crypto-currency trading data for providing the crypto-currency to the National Tax Service (NTS) (400) or the tax refund shop (100).

4. The method of claim 3, further comprising:
when the second crypto-currency trading data is generated, transmitting the second crypto-currency trading data to a node device of the customhouse (300) using a public key of the customhouse (300) included in the generated second crypto-currency trading data.

5. The method of claim 4, further comprising:
when the third crypto-currency trading data is generated, broadcasting the generated third crypto-currency trading data to node devices of a peer-to-peer (P2P) network; or
when the fourth crypto-currency trading data is generated, broadcasting the generated fourth crypto-currency trading data to the node devices of the P2P network.

6. The method of claim 3, wherein the tax refund shop (100), the customhouse (300), the NTS (400), and the foreigner (200) each include a node device performing the crypto-currency processing, and each node device may store a private key for verifying ownership for trading in advance.

7. The method of claim 3, wherein the first crypto-currency trading data includes trading details information including information of the tax refund shop (100), goods amount information, tax refund information, and passport information, as metadata.

8. The method of claim 3, wherein the first crypto-currency trading data is data in which signatures of a plurality of subjects are set on the foregoing conditions.

9. The method of claim 8, wherein the first crypto-currency trading data includes a lock script in which an address of a recipient of trading data and the foregoing conditions are recorded and a release script in which a signature signed by a sender transmitting the trading data through a private key is recorded.

10. The method of claim 9, wherein, in the lock script, a condition value indicating that a signature is to be made using a tax refund public key, a customhouse public key, a foreigner public key, an NTS public key, and at least two private keys are recorded.

11. The method of claim 10, wherein, in the release script of the third crypto-currency trading data, a signature made through the private key of the tax refund shop (100) and a signature made through the private key of the customhouse (300) is recorded.

12. A computer-readable recording medium in which a program for performing the tax refund method of claims 1 to 11 is recorded.

13. A computer program stored in a computer-readable recording medium for performing the tax refund method of claims 1 to 11.
